# EUROPEAN PATENT SPECIFICATION

(11) **EP 0 707 528 B1**
(45) Date of publication and mention of the grant of the patent: **09.09.1998**
(21) Application number: 94920480.4
(22) Date of filing: 01.07.1994
(51) Int. Cl.: B27B 25/02

(54) **A FRICTION PROTECTOR FOR A RUBBER DRIVE WHEEL**
REIBUNGSSCHUTZELEMENT FÜR EIN GUMMIANTRIEBSRAD
ELEMENT PROTECTEUR CONTRE LA FRICTION DESTINE A UNE ROUE MOTRICE CAOUTCHOUTEE

(30) Priority: 07.07.1993 FI 933108; 02.12.1993 FI 930579 U
(43) Date of publication of application: 24.04.1996
(73) Proprietor: MOISIO, Juha, FIN-44670 Suovanlahti (FI)
(72) Inventor: MOISIO, Juha, FIN-44670 Suovanlahti (FI)
(74) Representative: Enskat, Michael Antony Frank
(86) International application number: FI9400305
(87) International publication number: WO9501856

(56) References cited:
- DE-A- 3 823 661
- FR-A- 2 451 280
- SE-A- 9 000 590
- SE-B- 337 198
- US-A- 1 584 654
- US-A- 1 842 742
- US-A- 3 875 987

## Description

The object of the invention is a friction protector for a solid rubber drive wheel of a timber harvester. Such a friction protector is known, for example, from SE-C-500 766.

Rubber drive wheels are in general use in the transfer of long objects such as logs and similar, for example in the felling grab of timber-harvesters. Several species of trees have, during their growth, a stage when the bark is easily detached, the so-called bast time. It is then difficult for harvesters to handle timber, as the drive wheels tend to slip during operations. In many cases rubber drive wheels have good properties when compared to metal drive wheels, but in some special types of forest very hard, dry branches form on the trees, which cause great wear on rubber drive wheels.

Due to the occasional slipperiness and great wear, it is sensible to protect the drive wheels and reduce slipping, when these special circumstances occur.

The use of friction chains made from steel chain is a usual way of reducing slipping. The grip of traditional chains on top of drive wheels manufactured as traditional smooth solid rubber wheels is not very great, because the chain tends to rotate on the contact surface between the tree trunk and the drive wheel. This causes slipping, which in turn causes an increase in the power required and makes longitudinal measurement difficult, as well as causing the log to be moved backwards and forwards while searching for the cutting point. In stone quarries and similar so-called protector chains are used in excavators and similar. On account of their massiveness, complexity, and constructional solutions, they are difficult to adapt as drive wheel protector chains.

By means of a rubber drive wheel friction protector in accordance with this invention, these difficulties can be overcome in a simple manner. By means of the invention it is possible to manufacture a friction protector that protects a rubber drive wheel, increases the gripping surface as the pressure increases, prevents slipping, and is easily installed. The characteristic features of the invention are described in the accompanying Patent Claims. When, in accordance with the invention, the chain that was previously used as a slip-stop is replaced at each place with plates equipped with gripping spikes, the under surface of which is equipped with members that prevent slipping against a rubber surface, a friction protector is created that does not rotate and has a good grip.

In what follows, the invention is illustrated with reference to the accompanying figures, which present various friction protectors in accordance with the invention.
- Figure 1: shows the use of a rubber drive wheel friction protector in connection with the opposing drive wheels of a timber harvester.
- Figure 2: shows a partial enlargement of Figure 1.
- Figure 3: shows a form of application of another friction protector.
- Figure 4: shows a form of application of a third friction protector.
- Figure 5: shows a slip-stop from the friction protector in Figure 4.

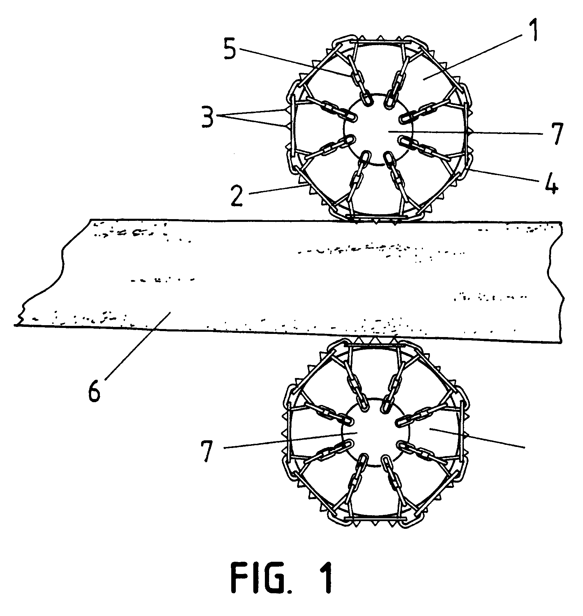

In Figure 1, the drive wheels are shown as they would appear seen from beneath the harvester, when log 6 is moved as the drive wheels 1 rotate. The pressure of the wheels 1 against the log 6 can be adjusted, which at the same time adjusts their gripping power in relation to the log. On top of each drive wheel 1 there are friction protectors, which consist of slip-stops 2 covering the entire circumference and are formed from separate plates. Gripping spikes 3 are welded onto them. The plate-like slip-stops are connected to one another by means of triangular connector pieces 4, the length of which can be adjusted by turning them to different positions. On the other hand, here they form auxiliary slip-stops, which prevent the plate-like slip-stops from moving along the circumferential surface of the rubber drive wheel 1. This auxiliary slip-stop can also be arranged in other ways on these plate-like slip-stops 2. The plate-like slip-stops 2 are connected to the circumference support 7 by means of the connector pieces 4 and chains 5.

The triangular connector pieces 4 help during the installation of the friction protector in that by means of them the circumference of friction protector can be made larger than that of the drive wheel, when it is easy to set the protector on top of the circumference of the drive wheel 1. After this, a sufficient number of the connector pieces are turned to a position that reduces the circumference, when the friction protector tightens round the drive wheel. After this, the connector pieces 4 with their slip-stops 2 are locked in place by tightening the chains 5 running from the connector pieces 4 to the attachment points of the circumference supports 7, or in a traditional way by threading them through a circular tensioning chain, which is tightened in a suitable manner. Either the rim of the rubber drive wheel directly, or another corresponding piece, can be used as a circumferential support.

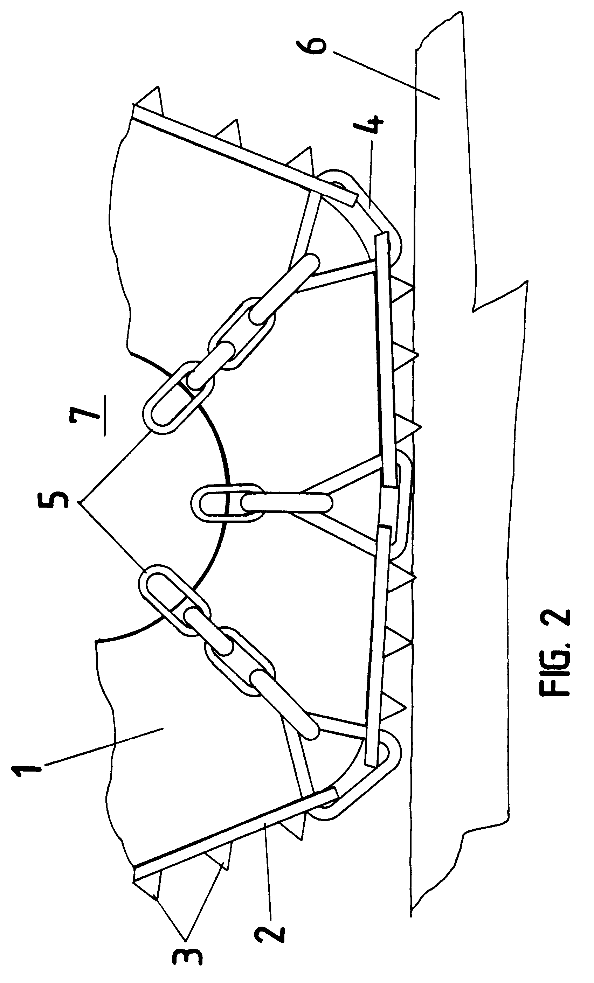

Figure 2 shows schematically the operation of a friction protector as it presses against the surface of a tree 6 being moved. In this figure the situation is such that there is great pressure from the drive wheels. Depending on the pressure the friction protector can be made to grip the surface of the timber in different ways. When the pressure is small, the outer gripping spikes 3 of the plate-like slip-stops 2 press very flexibly onto the surface of the timber. When an extremely effective grip is required, pressure is increased, when, due to the flexibility of the rubber drive wheel 1, one or two friction plates are pressed in their entirety against the trunk 6. This friction protector is made to work in such a way that as pressure increases it automatically increases the number of gripping spikes 3 on the surface of the tree being moved, when the area in contact increases. As the plate-like slip-stops 2 cover most of the surface of the drive wheel 1, they provides it with the best possible protection.

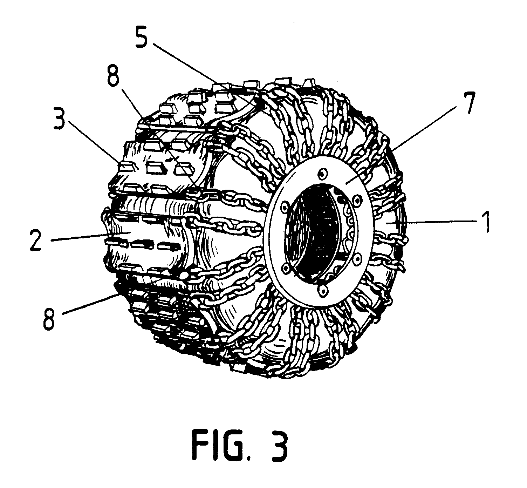

Figure 3 shows another form of application of a friction protector in accordance with the invention. For operationally similar components, the same reference numbers are used as above. In this version, the abovementioned triangular connector pieces are not used, instead each plate-like slip-stop 2 is attached to the circumferential support 7 by means of its own attachment chain 5. Here the edges of the slip-stops 2 on the side of the chains 5 are shaped as auxiliary slip-stops 8, which correspond to the aforementioned connector pieces 4 in that they prevent the slip-stops 2 from slipping along the circumference of the rubber drive wheel.

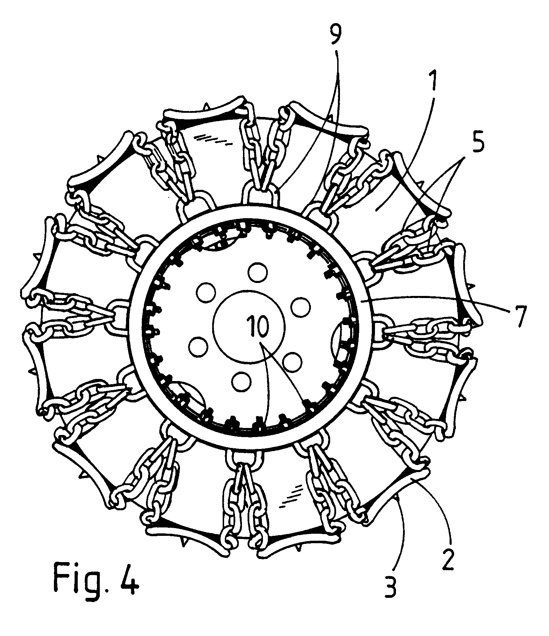

The friction protector in Figure 4 is similar to that shown in Figure 3. Here too the same reference numbers as above are used for operationally similar components. As in Figure 3, the circumference of drive wheel 1 is covered with slip-stops 2, which are secured by means of chains 5 to the circumference support 7. In this version, the circumferential support 7 consists of U-loops 9 tightened by nuts 10. In this manner it is easy to tighten the slip-stops 2 to the desired pressure.

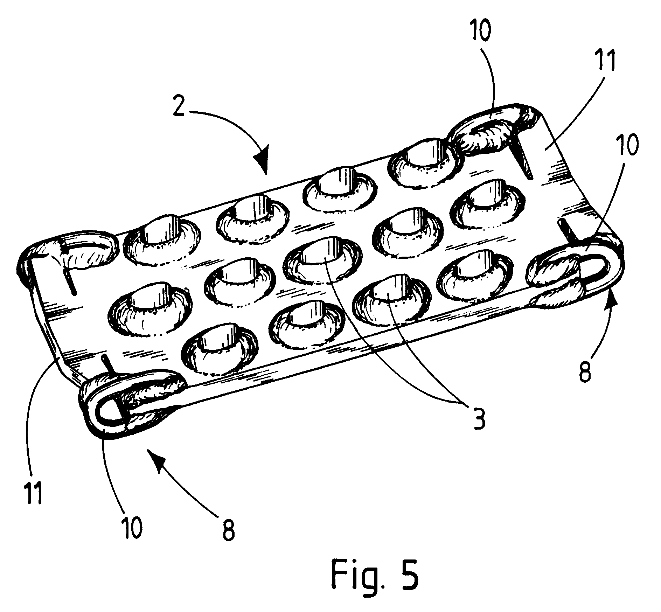

Each slip-stop 2 is advantageously in accordance with Figure 5. It is manufactured from flat sheet metal, which, it is true, bends somewhat when the gripping spikes 3 are welded in place. At the ends, strips 11 are formed upwards from the edges, which support the attachment loops 10 from the side. Thus the loop 10 can be securely welded to the base plate. The under parts of the attachment loops 10 are formed by the aforementioned auxiliary slip-stops 8, which press against the rubber drive wheel.

## Claims

1. A friction protector for a solid rubber drive wheel of a timber harvester, characterised in that said friction protector comprises a plurality of plates (2) arranged to cover substantially the whole of the outer surface of said wheel (1), each plate having outwardly directed gripping projections (3), a pair of circumferential supports (7) arranged to be located adjacent opposite flanks of the drive wheel (1), attachment chains (5) connecting the plates (2) to the circumferential supports (7) and auxiliary members (4,8) attached to the plates (2) so as to bear against the flanks of the rubber drive wheel (1), in order to resist circumferential slippage with respect to the rubber wheel (1).

2. A friction protector according to Claim 1, characterised in that the plates (2) are interconnected by means of triangular loops (4) to which said chains (5) are secured.

3. A friction protector according to Claim 1, characterised in that the plates (2) are each separately attached by said chains (5) to the circumferential support (7).

4. A friction protector according to Claim 3, characterised in that each plate has chain attachment lug which form said auxiliary members (8).

5. A friction protector according to Claim 4, characterised in that opposite axial end portions of each plate define strips (11) pointing towards the edges, to which the loops (10) forming said attachment lugs are also welded.

6. A friction protector according to Claim 3 or Claim 4, characterised in that the circumferential support (7) includes radially adjustable U-loops (9), to which the chains (5) are attached.

7. A solid rubber drive wheel (1) for a timber harvester carrying a friction protector, characterised in that the friction protector comprises a plurality of separate plates (2) covering substantially the whole of the outer circumferential surface of the wheel, the outer surface of each plate (2) carrying a plurality of gripping projections, a pair of circumferentially extending supports (7) located adjacent opposite flanks of the wheel (1), a plurality of attachment chains (5) connecting the plates (2) to the circumferential supports (7), and plurality of auxiliary members (4,8) attached to the plates (2) to bear against the flanks of the wheel (1) to resist slippage relative to the wheel (1).

8. A drive wheel according to Claim 7, characterised in that the plates (2) are interconnected by means of triangular loops (4) to which said chains (5) are secured.

9. A drive wheel according to Claim 7, characterised in that each plate (2) is separately attached to the circumferential support (7) by said chains (5).

10. A drive wheel according to Claim 9, characterised in that each plate (2) has chain attachment lugs which form said auxiliary members (8).

11. A drive wheel according to Claim 10, characterised in that opposite axial end portions of each plate define strips (11) pointing towards the edges, to which the loops (10) forming said attachment lugs are also welded.

12. A drive wheel according to Claim 9 or Claim 10, characterised in that the circumferential support (7) includes radially adjustable U-loops (9) to which the chains (5) are attached.

## Patentansprüche

1. Gleitschutzvorrichtung für Harvester-Vollgummieinzugswalzen, dadurch gekennzeichnet, daß die besagte Vorrichtung mehrere Greifelementträger (2), die im wesentlichen die gesamte Umfangsfläche der Einzugswalze (1) bedecken, wobei der einzelne Greifelementträger nach außen gerichtete Greifelemente (3) hat, ein Paar Stützringe (7) an den Stirnseiten der Einzugswalze (1), mehrere die Greifelementträger (2) mit dem Stützring (7) verbindende Befestigungsketten (5) und mehrere an den Greifelementträgern befestigte Hilfsteile (4, 8), die zwecks Verhinderns eines Rutschens der Greifelementträger auf der Gummiwalze gegen die Flanken der Walze (1) drücken, umfaßt.

2. Gleitschutzvorrichtung nach Anspruch 1, dadurch gekennzeichnet, daß die Greifelementträger (2) durch dreieckförmige Verbindungsglieder (4), an denen die besagten Ketten (5) befestigt sind, aneinandergebunden sind.

3. Gleitschutzvorrichtung nach Anspruch 1, dadurch gekennzeichnet, daß die Greifelementträger (2) jeder für sich mit den besagten Ketten (5) am Stützring (7) befestigt sind.

4. Gleitschutzvorrichtung nach Anspruch 3, dadurch gekennzeichnet, daß an jedem Greifelementträger eine Kettenbefestigungsöse vorhanden ist, die die besagten Hilfsteile (8) bildet.

5. Gleitschutzvorrichtung nach Anspruch 4, dadurch gekennzeichnet, daß bei jedem Greifelementträger die einander entgegengesetzten axialen Stirnteile zu den Rändern hin gerichtete Streifen beschreiben, an welche die die Refestigungsösen bildenden Glieder (10) gleichfalls angeschweißt sind.

6. Gleitschutzvorrichtung nach Anspruch 3 oder 4, dadurch gekennzeichnet, daß zu dem Stützring (7) in radialer Richtung verstellbare U-Bügel (9) gehören, an denen die Ketten (5) befestigt sind.

7. Mit Gleitschutzvorrichtung versehene Harvester-Vollgummieinzugswalze (1), dadurch gekennzeichnet, daß die Gleitschutzvorrichtung mehrere Greifelementträger (2), die im wesentlichen die gesamte Umfangsfläche der Einzugswalze (1) bedecken, wobei der einzelne Greifelementträger nach außen gerichtete Greifelemente hat, ein Paar Stützringe (7) an den Stirnseiten der Einzugswalze (1), mehrere die Greifelementträger (2) mit dem Stützring (7) verbindende Befestigungsketten (5) und mehrere an den Greifelementträgern (2) befestigte Hilfsteile (4, 8), die zwecks Verhinderns eines Rutschens der Greifelementteile auf der Gummiwalze (1) gegen die Flanken der Walze (1) drücken, umfaßt.

8. Einzugswalze nach Anspruch 7, dadurch gekennzeichnet, daß die Greifelementträger (2) durch dreieckförmige Verbindungsglieder (4) untereinander verbunden sind, an denen die besagten Ketten (5) befestigt sind.

9. Einzugswalze nach Anspruch 7, dadurch gekennzeichnet, daß jeder der Greifelementträger (2) mit den Ketten (5) einzeln an dem Stützring (7) befestigt ist.

10. Einzugswalze nach Anspruch 9, dadurch gekennzeichnet, daß an jedem der Greifelementträger Kettenbefestigungsösen vorhanden sind, die die besagten Hilfsteile (8) bilden.

11. Einzugswalze nach Anspruch 10, dadurch gekennzeichnet, daß bei jedem der Greifelementträger die einander entgegengesetzten axialen Stirnseitenteile zu den Rändern hin gerichtete Streifen (11) beschreiben, an welche die die Befestigungsösen bildenden Glieder (10) gleichfalls angeschweißt sind.

12. Einzugswalze nach Anspruch 9 oder 10, dadurch gekennzeichnet, daß der Stützring (7) in radialer Richtung verstellbare U-Bügel (9) aufweist, an denen die Ketten (5) befestigt sind.

## Revendications

1. Dispositif antidérapant pour pneumatiques à bandage plein de roue d'entraînement d'émondeuse-tronçonneuse de moissonneuse forestière, caractérisé par le fait que ledit dispositif antidérapant est composé de plusieurs plaques (2) disposées de sorte à recouvrir l'essentiel de la surface extérieure de la circonférence dudit pneumatique (1), chaque plaque étant munie sur la surface extérieure de crampons (3) dirigés vers l'extérieur ; le dispositif antidérapant comprend également une paire de supports circulaires (7) venant s'agencer sur les flancs opposés du pneumatique, des chaînes de fixation (5) reliant les plaques (2) aux supports circulaires (7), et des organes auxiliaires (4, 8) fixés aux dites plaques (2), le tout se plaçant sur le pneumatique et étant destiné à prévenir le dérapage circulaire du pneumatique (1).

2. Dispositif antidérapant conforme à la revendication 1, caractérisé par le fait que les plaques (2) sont reliées entre elles par des maillons triangulaires (4) auxquels sont fixées lesdistes chaînes (5).

3. Dispositif antidérapant conforme à la revendication 1, caractérisé par le fait que les plaques (2) sont chacune reliées individuellement par lesdites chaînes (5) au support circulaire (7).

4. Dispositif antidérapant conforme à la revendication 3, caractérisé par le fait que chaque plaque a des oreilles de fixation constituant lesdits organes auxiliaires (8).

5. Dispositif antidérapant conforme à la revendication 4, caractérisé par le fait que les extrémités opposées dans le sens axial de chaque plaque forment des barrettes (11) pointant vers les bords et auxquelles les oreilles de fixation (10) sont également soudées.

6. Dispositif antidérapant conforme aux revendications 3 ou 4, caractérisé par le fait que le support circulaire (7) est muni de boucles en U (9) réglables dans le sens radial et auxquelles sont fixées les chaînes (5).

7. Roue d'entraînement à pneumatique à bandage plein (1) pour émondeuse-tronçonneuse de moissonneuse forestière munie d'un dispositif antidérapant caractérisée par le fait que le dispositif antidérapant est composé de plusieurs plaques (2) disposées de sorte à recouvrir l'essentiel de la surface extérieure de la circonférence de la roue, chaque plaque (2) étant munie sur sa surface extérieure de crampons ; le dispositif antidérapant comprend également une paire de supports circulaires (7) venant s'agencer sur les côtés opposés du pneumatique (1), plusieurs chaînes de fixation (5) reliant les plaques (2) aux supports circulaires (7), et plusieurs organes auxiliaires (4, 8) fixés aux plaques (2), le tout se plaçant sur le pneumatique et étant destiné à prévenir le dérapage circulaire de la roue (1).

8. Roue d'entraînement conforme à la revendication 7, caractérisée par le fait que les plaques (2) sont reliées entre elles par des maillons triangulaires (4) auxquels sont fixées lesdites chaînes (5).

9. Roue d'entraînement conforme à la revendication 7, caractérisée par le fait que les plaques (2) sont chacune reliées individuellement par lesdites chaînes (5) au support circulaire (7).

10. Roue d'entraînement conforme à la revendication 9, caractérisée par le fait que chaque plaque est munie d'oreilles de fixation constituant lesdits organes auxiliaires (8).

11. Roue d'entraînement conforme à la revendication 10, caractérisée par le fait que les extrémités opposées dans le sens axial de chaque plaque forment des barrettes (11) pointant vers les bords et auxquelles les oreilles de fixation (10) sont également soudées.

12. Roue d'entraînement conforme aux revendications 9 ou 10, caractérisée par le fait que le support circulaire (7) est muni de boucles en U (9) réglables dans le sens radial et auxquelles sont fixées les chaînes (5).
